# EUROPEAN PATENT APPLICATION

(11) **EP 4 391 298 A1**
(43) Date of publication of application: **26.06.2024**
(21) Application number: 22858424.9
(22) Date of filing: 12.08.2022
(51) Int. Cl.: H02J 15/00, B63B 25/02

(54) **SYSTEM AND METHOD FOR TRANSPORTING ENERGY BY SHIP**

(30) Priority: 16.08.2021 JP 2021132402
(71) Applicant: Powerx, Inc., Tokyo, 107-6243 (JP)
(72) Inventor: ITO, Masahiro, Tokyo 107-6243 (JP)
(74) Representative: Peters, Sebastian Martinus
(86) International application number: PCT/JP2022/030729
(87) International publication number: WO 2023/022103

(57) **Abstract**

[Problem] To efficiently transport an energy source such as electricity to any reception facility without using a power transmission cable.

[Solution] An energy transport system (100) comprises: a transport ship (10) that is equipped with holding means for an energy source; a supply facility (20) that supplies the energy source to the holding means of the transport ship (10); and a reception facility (30) that receives the energy source supplied from the holding means of the transport ship (10). Examples of the energy source held in the holding means of the transport ship (10) include electricity and hydrogen.

## Description

### TECHNICAL FIELD

The present invention mainly relates to a system and method for transporting energy between onshore facilities by a ship via a sea route.

### BACKGROUND ART

Conventionally, in an offshore wind power generation system, for example, a power transmission cable is laid on the ocean floor or under the sea, and electricity generated by an offshore power generator is transmitted to an onshore power system via the undersea power transmission cable. For example, Patent Literature 1 discloses a wiring system in which, in order to lay a power transmission line regardless of the topography of the ocean floor, the power transmission line is installed in a floating state between a plurality of offshore power generation facilities. In addition, Patent Literature 2 discloses that in order to stably supply power generated offshore nationwide, a ring-shaped power transportation network is provided surrounding the land and connecting offshore power generation facilities, and discloses that a power transportation network system includes power transmission lines from this offshore transportation network to land.

### CITED LITERATURE

### PATENT LITERATURE

| | |
|---|---|
| Patent Literature 1: | JP 2014-093902 A |
| Patent Literature 2: | JP 2014-158363 A |

### SUMMARY OF INVENTION

### TECHNICAL PROBLEM

Incidentally, in conventional systems, for example, a power transmission cable is installed on the ocean floor or under the sea in order to transmit electricity generated by an offshore power generation facility to a reception facility onshore, and electricity is transported by this power transmission cable. However, in addition to the time-consuming and costly installation and maintenance of power transmission cables, such conventional systems have the following various problems.

For example, in order to install power transmission cables in the sea, for example, since the procedures for obtaining permission from the national or local government and the installation work take time, it takes a lot of time until the power generation facility starts operating.

Moreover, in a case where a power transmission cable is installed in the sea, there is a risk of affecting the natural environment in the sea or on the ocean floor, and thus sufficient care must be taken when installing the power transmission cable, and depending on the environmental conditions, there are cases in which it may not be possible to install a power transmission cable.

In addition, since power transmission cables are fixed on the ocean floor or under the sea, there are no options as to where the power will be sent when using these power transmission cables. For example, in a case of transmitting power from an offshore power generation facility to an onshore reception facility via a power transmission cable, power can only be directly transmitted to specific reception facilities at any given time. Therefore, in order to transmit power from a power generation facility to any arbitrary location, it is always necessary to go through an onshore power system, which poses a problem of poor power transmission efficiency.

Therefore, a main object of the present invention is to provide a method for efficiently transporting an energy source such as electricity to an arbitrary reception facility without using a supply line such as an ocean floor power transmission cable.

### SOLUTION TO PROBLEM

As a result of intensive study on means for solving the problems of the known art, the inventor of the present invention has obtained knowledge that various problems faced by energy transportation methods using power transmission cables and the like can be solved by transporting energy by a ship via a sea route from a supply facility to a reception facility. Based on the above knowledge, the inventor of the present invention came up with an idea that the problems of the prior art could be solved, and completed the present invention. More specifically, the present invention has the following configurations or steps.

A first aspect of the present invention relates to an energy transportation system. The system according to the present invention basically includes: a transportation ship provided with holding means for holding an energy source; a supply facility located outside the transportation ship and configured to supply an energy source to the holding means of the transportation ship; and a reception facility located outside the transportation ship and configured to receive a supply of an energy source from the holding means of the transportation ship.

In the present invention, the "energy source" includes in addition to electricity, energy sources that are compatible with electricity. For example, in addition to electricity, energy sources include hydrogen, heat, potential energy, kinetic energy, and the like that are compatible with electricity and can be maintained for a certain period of time at a practical operational efficiency. Note that the energy source supplied from the supply facility to the transportation ship and the energy source supplied from the transportation ship to the reception facility do not necessarily have to be of the same type. For example, hydrogen may be supplied from a supply facility to a transportation ship, electricity may be generated from the hydrogen on the transportation ship, and electricity may be supplied from the transportation ship to a reception facility. The "supply facility" is a facility that can supply energy sources to transportation ships. For example, in a case where the energy source is electricity, a power transformer that is connected to a public power system and has the function of supplying power to a transportation ship and the like correspond to the supply facility referred to here. The "reception facility" is a facility that is capable of receiving an energy source from a transportation ship, and includes onshore facilities as well as ships, vehicles, trains, aircraft, and the like that are driven by an energy source supplied from a transportation ship. For example, in a case of electricity as an energy source, a power transformer that receives a supply of electricity from a transportation ship and transmits that electricity to a public power system and the like correspond to a reception facility referred to here. Note that the transportation ship may receive an energy source supplied from a power generation facility via a cable, or may supply an energy source to a reception facility via a cable. In this case, it is preferable that the transportation ship further includes a robot arm for suspending and holding the cable.

By transporting energy by a transportation ship via a sea route from the supply facility to the reception facility as in the above configuration, there are advantages, for example, as described below.

First, with the present invention, there is no need to lay a power transmission cable between the supply facility and the reception facility as in the past, and thus the initial investment for starting power transmission between those facilities can be reduced.

Moreover, the present invention also does not require an ocean floor power transmission cable, and thus the influence on the natural environment under the sea or on the ocean floor can be minimized.

Furthermore, in the present invention, the energy source is transported by a transportation ship rather than a power transmission cable, and thus the destination for energy transportation from the supply facility can be freely selected. For example, it becomes possible to transport energy sources directly to areas with high demand for electric power, commercial facilities, hospitals, public facilities, and the like.

In the present invention, holding means for holding an energy source is installed on the transportation ship, and thus timing of selling the electricity to a destination can be selected with some degree of freedom. For example, the unit sales price of an energy source can be increased by sending transportation ships to areas with high demand for electric power during times of high demand.

In the energy transportation system according to the present invention, the holding means of the transportation ship may be a storage battery (secondary battery). In this case, the electricity obtained by the power generation facility is supplied directly to the transportation ship after being transformed (voltage conversion and/or mutual conversion between direct current electricity and alternating current electricity) as necessary. "Storage batteries" include liquid batteries and all-solid-state batteries that convert electrical energy into chemical energy and store the energy, as well as mechanical batteries such as flywheel batteries and the like that convert electrical energy into physical energy such as rotational motion and store the energy. Mechanical batteries, when compared to liquid batteries, and the like, have an advantage in that the energy storage method is not a chemical reaction, so there is less risk of fire or explosion, and the lifespan thereof is longer than normal lithium batteries.

In the energy transportation system according to the present invention, the holding means of the transportation ship may be a hydrogen tank. In that case, hydrogen gas is generated by water electrolysis equipment or the like using electricity obtained from the power generation facility, and the obtained hydrogen gas is supplied to the hydrogen tank of the transportation ship. In addition, hydrogen gas will be supplied from the transportation ship to the reception facility, where the hydrogen gas will be used to generate electricity using fuel cells, or the like. Note that the water electrolysis equipment may be provided at a power generation facility, a supply facility, or on a transportation ship. Moreover, the fuel cell may be provided at the reception facility or may be provided on the transportation ship.

The energy transportation system according to the present invention further includes a power generation facility that supplies an energy source to the supply facility. Power is transmitted from the power generation facility to the supply facility, for example, via a known power system. As the "power generation facility", equipment that generates power by known methods such as wind power generation, solar power generation, tidal power generation, geothermal power generation, hydropower generation, biomass power generation, thermal power generation, and nuclear power generation may be employed. Note that the power generation facility includes various equipment necessary for supplying an energy source to a transportation ship, such as a power generator, a power transformer, power transmission equipment, power storage equipment, and energy source conversion equipment.

In the energy transportation system according to the present invention, the supply facility and the reception facility may be located onshore, such as on a remote island or on a coast. For example, power generated by an onshore power generation facility is transmitted via a public power system to a supply facility installed on the coast, and the supply facility supplies power to a transportation ship. The transportation ship then transports power via a sea route to a reception facility installed on the coast. In this way, power can be transported from the onshore supply facility to the reception facility using a transportation ship.

A second aspect of the present invention relates to an energy transportation method. In the transportation method according to the present invention, an energy source is transported by a transportation ship provided with energy source holding means from a supply facility outside the transportation ship to a reception facility outside the transportation ship. For example, the transportation method according to the present invention includes a step of supplying an energy source from a supply facility to a transportation ship, a step of transporting the energy source by the transportation ship, and a step of supplying the energy source from the transportation ship to a reception facility.

### ADVANTAGEOUS EFFECTS OF INVENTION

With the present invention, an energy source such as electricity can be efficiently transported to an arbitrary reception facility without using a supply line such as a power transmission cable.

### BRIEF DESCRIPTION OF DRAWINGS

FIG. 1 illustrates an overview of an energy transportation system according to the present invention, and uses electricity transportation as an example.
FIG. 2 is a block diagram illustrating an example of main elements of a transportation ship.
FIG. 3 schematically illustrates examples of a method of electrical charging of a transportation ship from an onshore supply facility.
FIG. 4(a) schematically illustrates an example of a method of discharging electricity from a transportation ship to an onshore reception facility. FIG. 4(b) schematically illustrates an example of a method of discharging electricity from a transportation ship to another ship.
FIG. 5 schematically illustrates an example of how to remove a container from a transportation ship.
FIG. 6 illustrates an example of a power transmission scheme.
FIG. 7 is a block diagram illustrating an application example of an energy transportation system. In particular, FIG. 7 illustrates a method of transporting hydrogen by a transportation ship, either as an alternative to or in combination with electricity.

### DESCRIPTION OF EMBODIMENTS

Hereinafter, embodiments for implementing the present invention are described using the drawings. The present invention is not limited to the embodiments described below, but also includes embodiments that are appropriately modified from the embodiments described below within a range that would be obvious to a person skilled in the art.

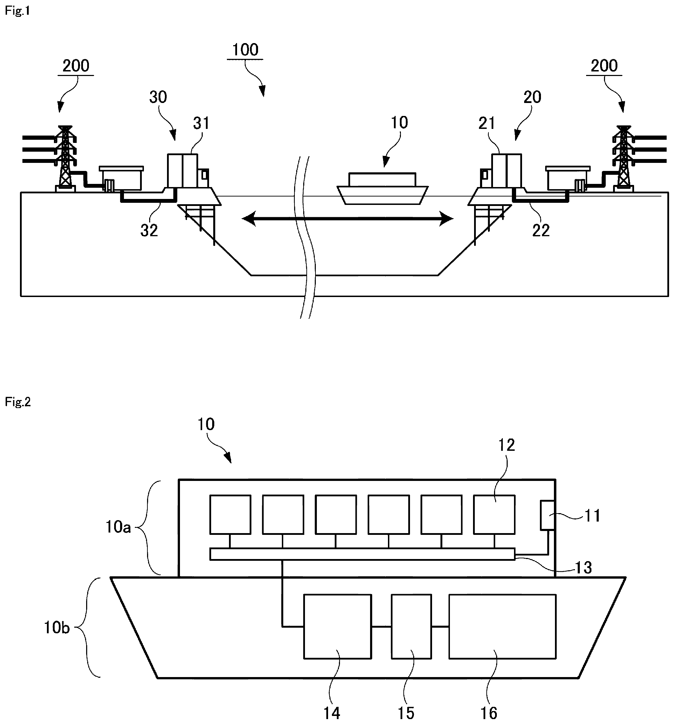

FIG. 1 illustrates an embodiment of an energy transportation system and an energy transportation system according to the present invention. In an energy transportation system 100 according to the embodiment illustrated in FIG. 1, electricity is transported by a transportation ship 10 via a sea route from a coastal supply facility 20 to a reception facility 30 on another coast. First, an overview of the present invention will be described with reference to FIG. 1.

As illustrated in FIG. 1, power is transmitted from a public power system 200 to a supply facility 20 installed on the coast. The supply facility 20 includes, for example, a power transformer 21 and a power transmission cable 32. At the supply facility 20, the power transformer 21 is connected to the power system 200 via the power transmission cable 32. The power transformer 21, converts, for example, power received from the power system 200 from alternating current (AC) electricity to direct current (DC) electricity. Further, when the transportation ship 10 arrives near the supply facility 20, DC electricity is supplied from the power transformer 21 to a storage battery (energy source holding means) provided on the transportation ship 10 via a charging cable. In this way, it is preferable that the supply of electricity to the transportation ship 10 be performed offshore via a cable. Further, the transportation ship 10, the storage battery of which has finished being electrically charged, navigates toward a predetermined reception facility 30 via a sea route. The reception facility 30 includes, for example, a power transformer 31 and a power transmission cable 32. When the transportation ship 10 arrives near the reception facility 30, the DC electricity held by the storage battery is supplied to the power transformer 31 via a discharge cable. The power transformer 31 converts electricity from DC electricity to AC electricity, and transmits the electricity to a public power system 200 including a substation and the like.

In this way, in the present invention, basically electrical energy is transported from an onshore supply facility 20 to a reception facility 30 on another shore, and eventually to a power system (power transmission network) by the transportation ship 10 provided with a storage battery. Although depending on the power source of the transportation ship 10, for example, even a motor-type transportation ship 10 using electricity as a power source can navigate approximately 300 to 500 km on the ocean without recharging. Therefore, the distance from the supply facility 20 to the reception facility 30 can be approximately 300 to 500 km.

FIG. 2 illustrates the main elements of the transportation ship 10. In particular, in this embodiment, the transportation ship 10 is of a motor type that uses electricity as a power source. However, the transportation ship 10 may be of an internal combustion engine type using fossil fuel as a power source, or may be of a hybrid type that uses both a motor and an internal combustion engine. Furthermore, the transportation ship 10 may be powered by hydrogen as a power source. For example, in a case of using hydrogen as a power source, the transportation ship 10 may be of a fuel cell type that drives a motor using electricity generated by a fuel cell, or the transportation ship 10 may be of a hydrogen engine type that obtains power by burning hydrogen by an internal combustion engine.

As illustrated in FIG. 2, the transportation ship 10 includes a container 10a and a hull 10b. The container 10a is configured to be removable from the hull 10b. In addition, the hull 10b is configured to be able to navigate independently even when the container 10a is removed.

The container 10a is an element for holding an energy source (specifically, electricity) to be transported from the supply facility 20 to the reception facility 30. The electricity stored in the container 10a is intended for transportation from the supply facility 20 to the reception facility 30, and thus during transportation, the electricity is basically held as is without being consumed as a power source for the transportation ship 10 and the equipment inside the ship. However, as will be described later, in an emergency or the like, the electricity stored in the container 10a may also be used as a power source for the transportation ship 10, or the like.

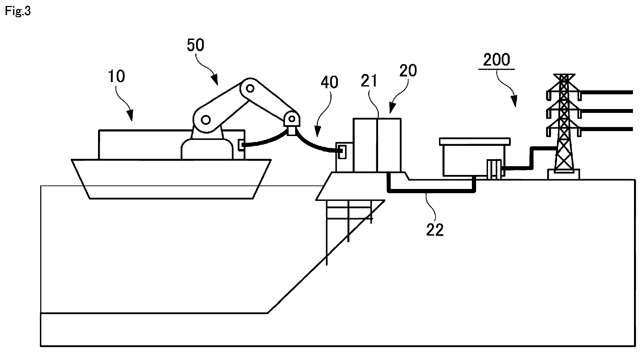

The container 10a includes a charging/discharging port 11, a plurality of battery cells 12, and a battery control device 13. The charging/discharging port 11, into which a charging/discharging cable 40 (see FIG. 3) can be inserted, is an interface for charging and discharging each battery cell 12. The battery cells 12 are storage batteries installed within the container 10a. Depending on the number of battery cells 12 installed, the electrical capacity that can be stored in the container 10a of the transportation ship 10 can be adjusted. For example, depending on the size of the transportation ship 10, the container 10a is capable of securing an electrical capacity of 200 to 6000 MWh. The battery control device 13 is connected to each battery cell 12 and is a control circuit for controlling the amount of charge/discharge of electricity to each battery cell 12 and the rate of charge/discharge. The battery control device 13 includes, on a circuit board, a CPU, a memory for storing a control program, a communication device with an external server device, a sensor device for detecting, for example, a state of charge of the battery cells 12, and the like.

Note that in this embodiment, the container 10a is configured to be removable from the hull 10b, but it may also be configured such that each battery cell 12 is removable from the container 10a. On the other hand, in a case where each battery cell 12 is removably attached to the container 10a, the container 10a itself may be fixed to the hull 10b in a non-removable manner. Furthermore, in this embodiment, the battery control device 13 is installed inside the container 10a; however, instead of this configuration, the battery control device 13 may also be installed on the hull 10b side.

The hull 10b of the transportation ship 10 basically has the same configuration as a general motor-type ship using electricity as a power source. That is, the hull 10b includes a drive battery 14, an inverter 15, and a motor 16. The drive battery 14 holds electricity that is consumed as a power source for the transportation ship 10 and internal equipment. The inverter 15 controls or converts the electricity output from the drive battery 14 and supplies the electricity to the motor 16. The motor 16 converts the electricity received from the inverter 15 into power. For example, the motor 16 obtains a propulsion force for the transportation ship 10 by rotating a screw propeller via a shaft (not illustrated).

In this way, the hull 10b has the drive battery 14 that is separate from the battery cells 12 for storing electricity for transportation, and therefore navigating is possible without consuming the electricity in the battery cells 12. However, in this embodiment, the drive battery 14 is electrically connected to the battery cells 12 via the battery control device 13. Therefore, in an emergency or the like, electricity in the battery cells 12 may be supplied to the drive battery 14. As a result, the transportation ship 10 is also able to navigate using the electricity in the battery cells 12 as a power source.

In addition, although not illustrated, the transportation ship 10 may transport hydrogen instead of electricity as an energy source. In this case, a hydrogen tank may be installed in the container 10a instead of the battery cells 12. Moreover, the transportation ship 10 may be one that navigates using hydrogen as a power source. In this case, a fuel cell may be installed in the hull 10b instead of the drive battery 14. Note that hydrogen can be transported by the transportation ship 10 that uses electricity as a power source, and electricity can also be transported by the transportation ship 10 that uses hydrogen as a power source.

FIG. 3 schematically illustrates a method of supplying electricity from the coastal supply facility 20 to the battery cells 12 of the transportation ship 10. The supply of electric power from the supply facility 20 to the transportation ship 10 is basically performed via the charging/discharging cable 40 while the transportation ship 10 remains at sea. When receiving the supply of electric power, the transportation ship 10 may be parked near the supply facility 20 by lowering the anchor, or may be parked near the supply facility 20 by controlling the motor and screw propeller without lowering the anchor. Note that the charging/discharging cable 40 may be provided on the transportation ship 10 or may be provided at the supply facility 20. In addition, the supply of electric power from the supply facility 20 to the transportation ship 10 is basically performed for the purpose of supplying electric power (stored in the battery cells 12) as an energy source to be transported to the reception facility 30. Note that it is also possible to supply electric power (electric power to be stored in the drive battery 14) from the supply facility 20 to the transportation ship 10 as a power source to be consumed by the transportation ship 10; however, this is not the main purpose.

In the system illustrated in FIG. 3(a), the transportation ship 10 includes a robot arm 50 for suspending and gripping the charging/discharging cable 40. By gripping the charging/discharging cable 40 with the robot arm 50, the transportation ship 10 can be charged without the charging/discharging cable 40 touching the sea surface.

In addition, the robot arm 50 preferably includes a stabilizer mechanism for maintaining the spatial position (horizontal position and vertical position) of the gripped site of the charging/discharging cable 40 constant. The stabilizer mechanism may mechanically maintain the spatial position of the gripped site. Further, the stabilizer mechanism may electronically perform control so as to maintain the spatial position of the gripped site based on detection information from a sensor device such as an acceleration sensor, a gyro sensor, or the like. The supply of electric power to the transportation ship 10 is performed at sea, and is easily affected by waves and tides. Therefore, by installing a stabilizer mechanism on the robot arm 50 of the transportation ship 10, it is possible to prevent the charging/discharging cable 40 from accidentally falling off from the charging/discharging port, or it is possible to prevent failure or disconnection of the charging/discharging cable 40 from occurring. Note that although not illustrated, it is also possible to supply electricity from the supply facility to the transportation ship 10 with the charging/discharging cable 40 floating on the sea surface and without the robot arm 50 being mounted on the transportation ship 10.

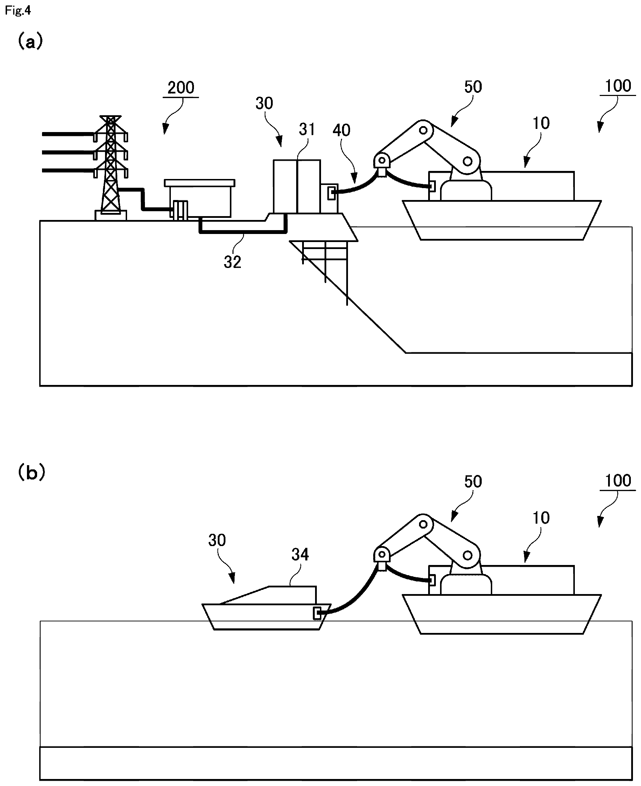

FIG. 4 schematically illustrates methods of supplying electricity from the transportation ship 10 to the coastal reception facility 30. Basically, it is preferable that the supply of electric power from the transportation ship 10 to the reception facility 30 be performed via the charging/discharging cable 40 while the transportation ship 10 remains offshore. However, in a case of supplying electricity to the reception facility 30 that is onshore, when there is a port near the reception facility 30, the transportation ship 10 may be anchored at the port.

In the system illustrated in (a) of FIG. 4, the onshore reception facility 30 includes a power transformer 31. The electricity stored in the battery cells 12 of the transportation ship 10 is supplied to the power transformer 31 via the charging/discharging cable 40 gripped by the robot arm 50. Since DC electricity is stored in the battery cells 12, the power transformer 31 converts the DC electricity to AC electricity, and then transmits the AC electricity to the power system 200 via the power transmission cable 32. Note that although not illustrated, it is also possible to supply electricity from the transportation ship 10 to the power transformer 31 with the charging/discharging cable 40 floating on the sea surface and without the robot arm 50 being mounted on the transportation ship 10.

In the example illustrated in (b) of FIG. 4, power is supplied from the transportation ship 10 to another ship 34 on the sea. An example of the ship 34 is a motor-type ship that navigates using electricity as a power source. In this case, by supplying electricity to the ship 34 from the battery cells 12 installed on the transportation ship 10, the ship 34 is able to charge the drive battery while offshore. In this way, the supply destination of the energy source from the transportation ship 10 is not limited to the onshore reception facility 30, but can also be a ship 34 on the ocean that requires an energy source such as electricity.

In addition, although not illustrated, the supply destination (reception facility) of the energy source from the transportation ship 10 may be a vehicle (EV or FCV) that is onshore, and it is also possible to directly supply an energy source to various locations such as commercial facilities, hospitals, residences, and public transportation facilities. In this manner, with the present invention, it becomes possible to freely select a destination for transporting the energy source by the transportation ship 10.

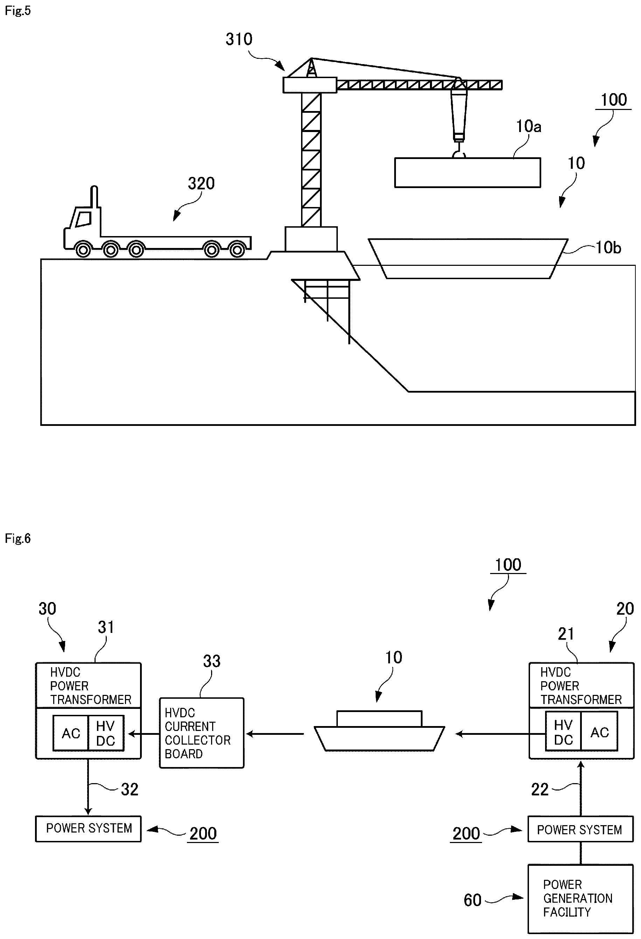

FIG. 5 illustrates a method for removing the container 10a from the transportation ship 10 and delivering the container 10a individually. As described above, the transportation ship 10 is configured such that the container 10a containing the battery cells 12 can be removed from the hull 10b. For this reason, for example, as illustrated in FIG. 5, after the transportation ship 10 is anchored at a port, the container 10a can be removed from the hull 10b by a crane 310, and the container 10a can be loaded onto a trailer 320. As a result, large-capacity containers 10a can be individually delivered to various regions and locations. For example, it is possible to freely deliver an energy source (electricity) to rural areas, to mountains and forests, to construction sites, and the like where power transmission lines are not installed. Note that the method for delivering the container 10a is not limited to the trailer 320, and other land transportation methods such as trains, air transportation methods such as helicopters and airplanes, and sea transportation methods such as cargo ships may also be used. It is also possible to unload and store the container 10a as is at a port as a backup power source.

FIG. 6 illustrates a power transmission scheme assumed in the present invention. AC electricity generated by the power generation facility 60 is transmitted to the supply facility 20 via the power system 200. At the supply facility 20, the power transformer 21 converts the AC electricity into DC electricity. In addition, at this time, the power transformer 21 converts the electricity into high-voltage DC electricity (HVDC) of about 200 kV to 500 kV. This high-voltage DC electricity is then supplied from the power transformer 21 to the transportation ship 10. In this way, by charging the battery cells of the transportation ship 10 with high-voltage DC electricity, power loss during transportation can be suppressed.

Moreover, electric power is supplied from the transportation ship 10 to the reception facility 30 similarly using high-voltage DC electricity. Therefore, it is necessary to provide the current collector board 33 and the power transformer 31 for high-voltage DC electricity on the reception facility 30 side as well. The electricity held by the battery cells of the transportation ship 10 is supplied to the power transformer 31 via the current collector board 33. The power transformer 31 converts the high-voltage DC electricity into AC electricity of about 100V to 250V that meets the standards of each region, and then transmits the electricity to the power system 200 via the power transmission cable 32.

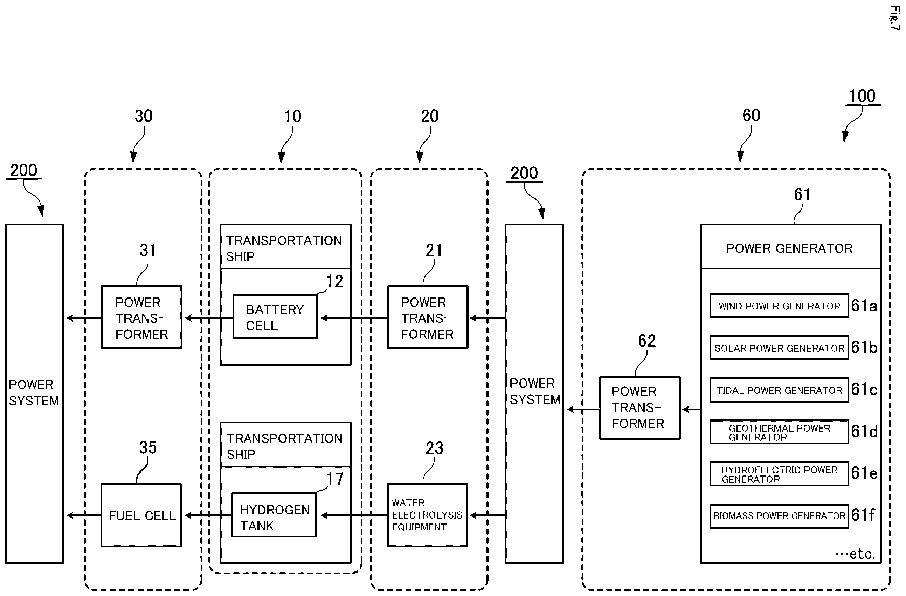

Next, an application example of an embodiment of the present invention described above will be explained with reference to FIG. 7. As illustrated in FIG. 7, the energy transportation system 100 according to the present invention includes the power generation facility 60. The power generation facility 60 includes a power generator 61 and a power transformer 62. As the power generator 61 it is possible to employ a power generation method that uses renewable energy such as, not only a wind power generator 61a, but also a solar power generator 61b, a tidal power generator 61c, a geothermal power generator 61d, a hydroelectric power generator 61e, and a biomass power generator 61f. In addition, as the power generator 61, a thermal power generator or a nuclear power generator can also be used. At the power generation facility 60, one type selected from among these types of power generators 61a to 61f or the like may be used for power generation, or a plurality of types of power generators may be combined and used for power generation. Note that, since each type of power generator is already well-known, the detailed structure of each type of power generator will not be explained. Electric power generated by the power generator 61 is supplied to the public power system 200 via the power transformer 62.

Moreover, in the embodiment described above, electricity is used as an energy source for transportation. That is, the supply facility 20 supplies electricity acquired from the power system 200 to the transportation ship 10. The transportation ship 10 charges the battery cells 12 with electricity in this manner and transports the power via sea route. For this reason, as in the transportation system illustrated in the upper part of FIG. 7, at the supply facility 20, the electricity is converted from AC electricity to DC electricity by the power transformer 21, and the battery cells 12 of the transportation ship 10 are charged, and then at the reception facility 30 as well, the electricity supplied from the battery cells 12 is converted from DC electricity to AC electricity by the power transformer 31 and transmitted to the power system 200.

On the other hand, in the application example of FIG. 7, hydrogen may also be used as an energy source for transportation. In this case, the supply facility 20 supplies electricity acquired from the power system 200 to water electrolysis equipment 23. The water electrolysis equipment 23 electrolyzes water, using electricity to generate high purity hydrogen gas. Hydrogen gas generated by the water electrolysis equipment 23 is supplied to the transportation ship 10 anchored or parked offshore via a hydrogen gas supply nozzle (supply line). The transportation ship 10 is provided with a hydrogen tank 17, and the hydrogen gas supplied from the water electrolysis equipment 23 is stored in the hydrogen tank 17. Note that the hydrogen gas supply line is preferably held by the robot arm 50 of the transportation ship 10, as in the example illustrated in FIG. 3.

When the filling of the hydrogen tank 17 is completed, the transportation ship 10 navigates toward the reception facility 30. In a case where hydrogen is used as an energy source for transportation, a fuel cell 35 is provided at the reception facility 30. Hydrogen gas is supplied to the fuel cell 35 from the hydrogen tank 17 of the transportation ship 10 via a supply nozzle (supply line). The fuel cell 35 generates electricity by causing a chemical reaction between hydrogen supplied from the transportation ship 10 and oxygen in the air. The electricity obtained by the fuel cell 35 is transformed as necessary and then transmitted to the power system 200. In this way, by transporting hydrogen by the transportation ship 10, the energy source obtained at the supply facility 20 can be delivered to the reception facility 30.

The energy transportation system 100 according to the present invention may include either the electricity transportation system (upper example) or the hydrogen transport system (lower example) illustrated in FIG. 7, or may include both of these transportation systems. That is, it is possible to select and execute electricity transportation and hydrogen transportation as necessary.

As mentioned above, in this specification, in order to express the content of the present invention, embodiments of the present invention have been described with reference to the drawings. However, the present invention is not limited to the above-described embodiments, and includes modifications and improvements that are obvious to those skilled in the art based on the matters described in this specification.

### INDUSTRIAL APPLICABILITY

The present invention relates to an energy transportation system and an energy transportation method. For example, the present invention may be suitably used in the power generation business and the power transmission business.

### REFERENCE SIGNS LIST

- 10: Transportation ship
- 10a: Container
- 10b: Hull
- 11: Charging/discharging port
- 12: Battery cell
- 13: Battery control device
- 14: Drive battery
- 15: Inverter
- 16: Motor
- 17: Hydrogen tank
- 20: Supply facility
- 21: Power transformer
- 22: Power transmission cable
- 23: Water electrolysis equipment
- 30: Reception facility
- 31: Power transformer
- 32: Power transmission cable
- 33: Current collector board
- 34: Ship
- 35: Fuel cell
- 40: Charging/discharging cable
- 50: Robot arm
- 60: Power generation facility
- 61: Power generator
- 62: Power transformer
- 100: Energy transportation system
- 200: Power system
- 310: Crane
- 320: Trailer

## Claims

1. An energy transportation system comprising:
a transportation ship provided with holding means for holding an energy source;
a supply facility located outside the transportation ship and configured to supply an energy source to the holding means; and
a reception facility located outside the transportation ship and configured to receive a supply of an energy source from the holding means.

2. The system according to claim 1, wherein the holding means is a storage battery.

3. The system according to claim 1, wherein the holding means is a hydrogen tank.

4. The system according to claim 1, further comprising a power generation facility configured to supply an energy source to the supply facility.

5. The system according to claim 1, wherein the supply facility and the reception facility are located onshore.

6. The system according to claim 1, wherein
the transportation ship receives an energy source from the power generation facility via a cable, or supplies an energy source to the reception facility via the cable; and
the transportation ship further comprises a robot arm for suspending and holding the cable.

7. An energy transportation method comprising transporting an energy source by a transportation ship provided with holding means for holding the energy source from a supply facility outside the transportation ship to a reception facility outside the transportation ship.
